(19) Europäisches Patentamt
European Patent Office
Office européen des brevets

(11) **EP 3 802 635 B1**

(12) **FASCICULE DE BREVET EUROPEEN**

(45) Date de publication et mention de la délivrance du brevet:
**06.07.2022 Bulletin 2022/27**

(21) Numéro de dépôt: **19737814.4**

(22) Date de dépôt: **23.05.2019**

(51) Classification Internationale des Brevets (IPC):
*C08F 36/06* (2006.01)   *C08F 236/06* (2006.01)
*C08C 19/44* (2006.01)   *C08C 19/25* (2006.01)

(52) Classification Coopérative des Brevets (CPC):
(C-Sets disponibles)
**C08F 36/06; C08C 19/25; C08C 19/44;**
**C08F 236/06**                                    (Cont.)

(86) Numéro de dépôt international:
**PCT/FR2019/051192**

(87) Numéro de publication internationale:
**WO 2019/224495 (28.11.2019 Gazette 2019/48)**

(54) **PROCÉDÉ DE SYNTHÈSE D'UN POLYBUTADIÈNE FONCTIONNALISÉ**

SYNTHESEVERFAHREN FÜR FUNKTIONALISIERTES POLYBUTADIEN

FUNCTIONALISED POLYBUTADIENE SYNTHESIS PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2018 FR 1854460**

(43) Date de publication de la demande:
**14.04.2021 Bulletin 2021/15**

(73) Titulaire: **COMPAGNIE GENERALE DES ETABLISSEMENTS MICHELIN**
**63000 Clermont-Ferrand (FR)**

(72) Inventeurs:
• **VAULTIER, Florent**
  **63040 CLERMONT-FERRAND CEDEX 9 (FR)**
• **COURBES, Gaël**
  **63040 CLERMONT-FERRAND CEDEX 9 (FR)**
• **SAID-DIATTA, Rokhiyatou**
  **63040 CLERMONT-FERRAND CEDEX 9 (FR)**
• **DE GAUDEMARIS, Benoit**
  **63040 Clermont-Ferrand Cedex 9 (FR)**

(74) Mandataire: **Le Cam, Véronique Marie Christine Manufacture Française des Pneumatiques Michelin**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
**WO-A1-01/34658      WO-A1-01/34659**
**WO-A1-03/097708     US-B1- 6 977 281**

(52) Classification Coopérative des Brevets (CPC):
(Cont.)

C-Sets
**C08F 36/06, C08F 4/545;**
**C08F 236/06, C08F 4/545**

(52) Classification Coopérative des Brevets (CPC):

C-Sets
**C08F 36/06, C08F 4/545;**
**C08F 236/06, C08F 4/545**

## Description

La présente invention concerne un procédé de synthèse de polybutadiène, à fort taux d'enchaînements cis-1,4 présentant à la fois, un indice de polydispersité inférieur à 2,3, un pourcentage moyen de chaînes fonctionnalisées élevé dans des conditions réalistes industriellement. Le polybutadiène présente également un fluage à froid réduit.

## ETAT DE LA TECHNIQUE

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en œuvre sous forme de compositions de caoutchouc utilisables pour la fabrication de divers produits semi-finis entrant dans la composition de pneumatiques.

Pour atteindre l'objectif de baisse d'hystérèse, de nombreuses solutions ont déjà été expérimentées. En particulier, on peut citer la modification de la structure des polymères et des copolymères diéniques au moyen d'agents de fonctionnalisation dans le but d'obtenir une bonne interaction entre le polymère ainsi modifié et la charge, qu'il s'agisse de silice ou d'une autre charge renforçante.

Il existe une vaste littérature concernant la fonctionnalisation de polymères obtenu par polymérisation anionique. La fonctionnalisation peut s'opérer soit lors de l'initiation de polymérisation au moyen d'un initiateur portant la fonction à incorporer à la chaîne élastomère, soit lors d'une réaction post-polymérisation au moyen d'un agent de fonctionnalisation. Des agents permettant d'introduire toutes sortes de fonctions au sein du polymère sont connus de l'homme du métier et largement décrits.

La polymérisation anionique permet de contrôler dans une certaine mesure la microstructure des polymères synthétisés. Toutefois, il n'est pas possible par ce type de polymérisation de synthétiser des polymères à fort taux d'enchaînements cis-1,4 (encore appelés polymères à fort taux de cis).

Les polymères à fort taux d'enchaînements cis-1,4 sont essentiellement préparés par polymérisation par catalyse de coordination. Il existe également une littérature très fournie traitant de ce type de catalyse.

Pour la préparation d'homopolymères du butadiène présentant un taux élevé d'enchaînements cis-1,4, il est connu d'utiliser des systèmes catalytiques à base :

- d'un sel de terre rare en solution dans un solvant hydrocarboné,
- d'un agent d'alkylation de ce sel constitué d'un alkylaluminium, et
- d'un halogénure d'un alkylaluminium.

Les documents de brevet WO-A-02/38636 et WO-A-03/097708 enseignent, pour l'obtention de polybutadiènes, d'utiliser un système catalytique de type « préformé » à base d'au moins :

- un diène conjugué de préformation, tel que le butadiène,
- un sel d'un ou de plusieurs métaux de terre rare d'un acide phosphorique organique, qui est en suspension dans au moins un solvant hydrocarboné inerte, saturé et de type aliphatique ou alicyclique,
- un agent d'alkylation constitué d'un alkylaluminium de formule $AlR_3$ ou $HAlR_2$, et
- un donneur d'halogène qui appartient à la famille des halogénures d'alkylaluminium à l'exclusion des sesquihalogénures d'alkylaluminium.

Les polybutadiènes obtenus au moyen de ce système catalytique présentent notamment un indice de polydispersité inférieur à 2,1 et une viscosité Mooney ML(1+4) à 100° C égale ou supérieure à 40. Ces caractéristiques combinées rendent ces polybutadiènes bien adaptés pour être utilisés dans des bandes de roulement d'enveloppe de pneumatique.

La fonctionnalisation de ces polymères à fort taux de cis est moins répandue du fait de la nature même des systèmes catalytiques utilisés.

Dans le cas de la polymérisation anionique il est possible d'obtenir une fonctionnalisation quantitative des extrémités de chaînes par terminaison sur des molécules nucléophiles grâce à l'absence de réaction de transfert ou de désactivation. Dans le cas de la polymérisation par catalyse les réactions secondaires de transfert et de terminaison peuvent être importantes et engendrer une baisse significative de la quantité de chaînes fonctionnalisables. L'ensemble de ces facteurs ne permettent pas d'obtenir des taux de chaînes fonctionnalisées importants dans le cas de la catalyse de polymérisation en condition industrielle.

Afin de remédier à ce problème, beaucoup conduisent la polymérisation à une température de polymérisation inférieure à 40°C, voire de l'ordre de 30°C, afin de réduire les réactions de désactivation thermique. Or conduire cette réaction à moins de 40°C pénalise fortement la productivité du procédé au niveau industriel.

Afin de remédier à ce problème, il a également été proposé de modifier significativement le catalyseur de polymérisation utilisé afin de réduire les réactions de transfert à l'aluminium (FR2939800A1 & FR2939801A1). Cette solution est toutefois onéreuse au plan industriel.

De plus, le polybutadiène obtenu présente un fort fluage à froid.

Le problème technique que se propose de résoudre l'invention est de disposer d'un procédé de synthèse compétitif, économique et flexible, adaptable à une production industrielle, permettant de produire un polybutadiène à fort taux de 1.4-cis et fonctionnalisé, présentant un pourcentage moyen de chaînes fonctionnalisées élevé. Le polybutadiène fonctionnalisé a avantageusement un fluage à froid faible.

L'invention présentée ici consiste donc en un procédé d'obtention d'un polybutadiène à fort taux d'enchaînements cis-1,4 présentant à la fois, un indice de polydispersité inférieur à 2,3, et un pourcentage moyen de chaînes fonctionnalisées suffisamment élevé dans des conditions réalistes industriellement. En outre, il a également un fluage à froid réduit.

**DEFINITIONS**

Dans cette description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, le « polybutadiène » sera également dénommé « élastomère ». Il s'agit d'un homopolymère obtenu par polymérisation de butadiène.

Dans la présente description, l'expression "fort taux de cis" ou " taux de cis élevé" en rapport avec l'élastomère, signifie un taux molaire d'enchaînement d'unités 1,4- cis d'au moins 90% par rapport à l'élastomère.

Dans la présente description, l'expression "pseudo-vivant" en rapport avec l'élastomère, signifie que l'élastomère possède tout ou partie de ces extrémités de chaîne réactives, notamment vis-à-vis d'agents de fonctionnalisation.

Dans la présente description, les « chaînes fonctionnalisées » désignent les chaînes du polybutadiène ayant réagi avec l'agent de fonctionnalisation, de formule A-$R_i$-B, tel que défini par la suite.

Dans la présente description, le pourcentage moyen de chaînes fonctionnalisées est le rapport entre le poids des chaînes du polybutadiène fonctionnalisées par rapport au poids total de chaînes de polybutadiène. Il est déterminé en multipliant le nombre de fonctions, $CH_2$-Si/PB, en mole par unité de masse du polymère, par la masse molaire en nombre dudit polymère. Le nombre de fonctions, en mole par unité de masse du polymère, est déterminé par RMN $^1$H suivant le protocole décrit en introduction des exemples.

Dans la présente description, on entend par "terre rare" un métal choisi parmi l'yttrium, le scandium et les lanthanides, métaux ayant un numéro atomique allant de 57 à 71 inclus dans le tableau périodique des éléments de Mendeleïev. De préférence le métal de terre rare est choisi parmi les lanthanides, le néodyme étant plus particulièrement préféré.

Dans la présente description, par l'expression « à base de » utilisée pour définir les constituants du système catalytique, on entend le mélange de ces constituants et/ou le produit de la réaction entre ces constituants.

Dans la présente description, le terme « pce » signifie partie en poids pour cent parties d'élastomère total.

Dans la présente description, on entend par « polymérisation en solution », une polymérisation conduite dans un milieu réactionnel comprenant de 70% à 99% en poids d'un solvant organique, par rapport au poids total des monomères et dudit solvant organique.

Dans la présente description, on entend par « polymérisation en semi-masse », une polymérisation conduite dans un milieu réactionnel comprenant entre 0% et 70% en poids d'un solvant organique, par rapport au poids total des monomères et dudit solvant organique.

Dans la présente description, on entend par « polymérisation en masse », une polymérisation conduite dans un milieu réactionnel ne comprenant pas de solvant organique.

**EXPOSE DE L'INVENTION**

L'invention a pour objet un procédé de préparation d'un polybutadiène fonctionnalisé caractérisé en ce qu'il comprend les étapes suivantes :

a) homopolymériser du butadiène à l'aide d'un système catalytique pour former un élastomère pseudo-vivant, ledit système catalytique étant à base d'au moins :

- Un monomère diène conjugué,
- Un sel d'un ou plusieurs métaux de terre rare d'un acide phosphorique organique,

- Un agent d'alkylation comprenant de l'aluminium, et
- Un donneur d'halogène comprenant un halogénure d'alkylaluminium,

ledit sel est en suspension ou en solution dans au moins un solvant hydrocarboné inerte et saturé de type aliphatique ou alicyclique ;

b) Ajouter à l'élastomère pseudo-vivant formé à l'étape (a) un composé polyfonctionnel, comprenant au moins trois groupements fonctionnels, ledit groupement fonctionnel étant susceptible de réagir sur l'extrémité réactive de l'élastomère pseudo-vivant;

c) Ajouter au mélange formé à l'étape (b) un agent de fonctionnalisation répondant à la formule A-$R_i$-B avec A désignant un groupement susceptible de réagir sur l'extrémité réactive de l'élastomère pseudo-vivant, $R_i$ désignant un atome ou un groupe d'atomes formant une liaison entre A et B, et B désignant une fonction susceptible de réagir avec une charge renforçante ;

d) Récupérer le polybutadiène fonctionnalisé ;

et en ce que dans le milieu de polymérisation, la quantité molaire totale d'aluminium est telle que le rapport molaire (aluminium/ sel de terre rare) présente une valeur comprise entre 1 et 5 et en ce que la polymérisation est conduite à une température comprise entre 40°C et 90°C.

Une caractéristique importante de ce procédé est le rapport molaire (aluminium/ sel de terre rare).

Dans le milieu de polymérisation, la quantité molaire totale d'aluminium est telle que le rapport molaire (aluminium/ sel de terre rare), en particulier le rapport molaire (aluminium/ sel de néodyme), présente une valeur comprise entre 1 et 5, avantageusement comprise entre 1 et 4, plus avantageusement allant de 2,5 à 3,8.

L'aluminium est apporté par le système catalytique et également, le cas échéant, par un ajout complémentaire dans le milieu de polymérisation d'alkyl aluminium tel que décrit par la suite.

De manière surprenante, on a constaté que ce rapport molaire (aluminium/ sel de terre rare) influençait le pourcentage moyen de chaînes fonctionnalisées.

Une autre caractéristique importante de ce procédé est la température de polymérisation qui est supérieure à 40°C, rendant le procédé adapté à une mise en oeuvre à l'échelle industrielle.

La température de polymérisation est comprise entre 40°C et 90°C, avantageusement comprise entre 40°C et 80°C, plus avantageusement comprise entre 45°C et 75°C, et varie avantageusement de 50°C à 70°C.

Une autre caractéristique importante du procédé selon l'invention est l'ordre d'ajout des composé polyfonctionnel et agent de fonctionnalisation : le composé polyfonctionnel est ajouté avant introduction de l'agent de fonctionnalisation.

Le rapport molaire composé polyfonctionnel / aluminium est avantageusement inférieur à 0,3, plus avantageusement compris entre 0,01 et 0,3.

Le rapport molaire agent de fonctionnalisation /aluminium est avantageusement d'au moins 1, tel que décrit par la suite.

Ainsi, par rapport à l'aluminium, le composé polyfonctionnel est en défaut alors que l'agent de fonctionnalisation est en quantité équimolaire ou en excès.

Là encore, l'aluminium est apporté par le système catalytique et également, le cas échéant, par un ajout complémentaire dans le milieu de polymérisation d'alkyl aluminium.

L'invention a également pour objet le polybutadiène obtenu par le procédé selon l'invention, qui se caractérise notamment par :

- son taux molaire d'enchaînement d'unités 1,4- cis d'au moins 90% par rapport au polybutadiène ;
- son indice de polydispersité inférieur à 2,3 ;
- son pourcentage moyen de chaînes fonctionnalisées supérieur à 25% ;
- avantageusement, sa viscosité Mooney ML(1+4) à 100° C égale ou supérieure à 40 ;
- sa valeur de cold-flow CF(1+6) à 100°C inférieure à 1 g, plus avantageusement inférieure à 0,5 g.

L'invention a également pour objet une composition de caoutchouc comprenant un polybutadiène fonctionnalisé selon l'invention et une charge inorganique renforçante.

## DESCRIPTION DETAILLEE DE L'INVENTION

Nous allons maintenant décrire dans le détail certains aspects du procédé selon l'invention et des autres objets de l'invention. Tous les aspects et variantes décrits par la suite sont combinables entre eux.

## I- ETAPE (a)

### Système catalytique

Le système catalytique est un système catalytique de type « préformé » à base d'au moins :

- un monomère diène conjugué,
- un sel d'un ou de plusieurs métaux de terre rare d'un acide phosphorique organique, ledit sel étant en suspension ou en solution dans au moins un solvant hydrocarboné inerte, saturé et de type aliphatique ou alicyclique,
- un agent d'alkylation comprenant de l'aluminium, le rapport molaire (agent d'alkylation/sel de terre rare) présentant avantageusement une valeur comprise entre 1 et 4, et
- un donneur d'halogène comprenant un halogénure d'alkylaluminium.

Le système catalytique peut être préparé en discontinu ou en continu. Le système catalytique peut être introduit directement dans le réacteur ou être mélangé préalablement à l'un au moins des autres composants qui alimentent le réacteur de polymérisation.

Le solvant hydrocarboné inerte dans lequel ledit sel de terre rare est en suspension ou en solution est avantageusement un solvant aliphatique ou alicyclique de bas poids moléculaire, tel que le cyclohexane, le méthylcyclohexane, le n-heptane, le pentane, ou un mélange de ces solvants.

Selon une autre caractéristique de l'invention, ledit système catalytique est tel que ledit sel de terre rare présente une teneur massique en métal de terre rare allant de 12,0% à 13,5%, déterminée à la fois par la technique de titrage complexométrique en retour par l'acide diéthylène diamine tétracétique (EDTA en abrégé) et par la technique de spectrométrie d'émission atomique couplée à un plasma induit (ICP/AES en abrégé). De préférence, ledit sel de terre rare présente une teneur massique en métal de terre rare allant de 12,5% à 13,2%.

Le sel d'acide phosphorique organique de terre rare est avantageusement un tris(organophosphate) de terre rare, l'organophosphate pouvant être choisi parmi les diesters d'acide phosphorique de formule générale (R'O)(R"O)PO(OH), dans laquelle R' et R", identiques ou différents, représentent un radical alkyle, aryle ou alkylaryle. A titre d'exemple on peut citer le tris [dibutyl phosphate] de néodyme, le tris [dipentyl phosphate] de néodyme, le tris [dioctyl phosphate] de néodyme, le tris [bis (2-éthylhexyl) phosphate] de néodyme, le tris [bis (1-méthylheptyl) phosphate] de néodyme, le tris [bis (p-nonylphenyl) phosphate] de néodyme, le tris [butyl (2-éthylhexyl) phosphate] de néodyme, le tris [(1-méthylheptyl) (2-éthylhexyl) phosphate] de néodyme, le tris [(2-éthylhexyl) (p-nonylphényl) phosphate] de néodyme, le tris [bis (2-éthylhexyl) phosphate] de néodyme, le tris[bis(oléyllyl) phosphate] de néodyme ou le tris[bis(linéolyl) phosphate] de néodyme.

En particulier on utilise à titre de sel de terre rare un tris [bis (2-éthylhexyl) phosphate] dudit ou desdits métaux de terre rare. A titre encore plus préférentiel, ledit sel de terre rare est le tris [bis (2-éthylhexyl) phosphate] de néodyme.

A titre de monomère diène conjugué utilisable pour préformer le système catalytique selon l'invention, on peut citer le 1,3-butadiène, à titre préférentiel.

On peut également citer le 2-méthyl-1,3-butadiène (ou isoprène), les 2,3-di (alcoyle en $C_1$ à $C_5$) 1,3-butadiène tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phényl-1,3-butadiène, le 1,3-pentadiène, le 2,4-hexadiène, ou tout autre diène conjugué ayant entre 4 et 8 atomes de carbone.

A titre d'agent d'alkylation utilisable dans le système catalytique selon l'invention, on peut citer des alkylaluminiums choisi parmi des trialkylaluminiums de formule $Al(R)_3$ ou des hydrures de dialkylaluminium de formule $HAl(R)_2$. Le groupement alkyle, R, comporte avantageusement de 1 à 20 atomes de carbone, plus avantageusement de 1 à 12 atomes de carbone. A titre de tri(alkylaluminium), on peut citer le triéthylaluminium, le tri-isopropylaluminium, le tri-isobutylaluminium, le tributylaluminium ou le trioctylaluminium. A titre d'hydrure de di(alkylaluminium), on peut citer l'hydrure de diisobutylaluminium.

A titre de donneur d'halogène utilisable dans le système catalytique selon l'invention, on peut citer utiliser un halogénure d'alkyle, un halogénure d'alkylaluminium ou un sesquihalogénure d'alkylaluminium. On utilise préférentiellement un halogénure d'alkylaluminium, le groupement alkyl comportant de 1 à 8 atomes de carbone. Parmi ceux-ci, on préfère le chlorure de diéthylaluminium.

Selon une autre caractéristique de l'invention, le ou les métaux de terre rare sont présents dans le système catalytique selon une concentration égale ou supérieure à 0,005 mol/l et, de préférence, allant de 0,010 à 0,1 mol/l et plus particulièrement allant de 0,02 mol/l à 0,08 mol/l.

Selon des variantes de l'invention, le rapport molaire (agent d'alkylation / sel de terre(s) rare(s)) dans ledit système catalytique présente avantageusement une valeur allant de 1 à 2.

Selon des variantes de l'invention, le rapport molaire (donneur d'halogène / sel de terre rare) présente une valeur allant de 2 à 3,6 et encore plus préférentiellement de 2,4 à 3,2, encore plus préférentiellement allant de 2,5 à 3.

Selon des variantes de l'invention, le rapport molaire (monomère de préformation / sel de terre(s) rare(s)) présente une valeur allant de 15 à 70, voire de 25 à 50.

Un procédé de préparation d'un tel système catalytique est par exemple décrit dans la demande de brevet WO02/38636.

## Ajout décalé d'alkylaluminium

Selon des variantes d'exécution du procédé de polymérisation catalytique conforme à l'invention, on peut introduire dans le réacteur de polymérisation, par un flux indépendant de l'introduction du système catalytique utilisé pour la réaction de polymérisation, une quantité supplémentaire prédéterminée d'au moins un composé alkylaluminium de formules $Al(R)_3$ ou $HAl(R)_2$ ou $(R''')_nAl(R''')_{3-n}$, dans lesquelles R et R''' représentent un groupe alkyle de 1 à 20 atomes de carbone, saturé ou non, préférentiellement de 1 à 12 atomes de carbone, R'''' représente un groupe allylique, n un entier inclusivement de 1 à 3.

A titre de composé alkylaluminium, on peut citer des alkylaluminiums tels que:

- des trialkylaluminiums tels que par exemple le triméthylaluminium, le triéthylaluminium, le tri-n-propylaluminium, le triisopropylaluminium, le tri-n-butylaluminium, le tri-t-butylaluminium, le triisobutylaluminium, le tri-n-pentylaluminium, le tri-n-hexylaluminium, le tricyclohexylaluminium, de préférence le triisobutylaluminium ou
- des hydrures de dialkylaluminium tels que par exemple l'hydrure de diéthylaluminium, l'hydrure de diisopropylaluminium, l'hydrure de di-n-propylaluminium, l'hydrure de diisobutylaluminium, l'hydrure de di-n-octylaluminium, l'hydrure de di-n-butylaluminium, de préférence l'hydrure de diisobutylaluminium.

Avantageusement, le rapport molaire (composé alkylaluminium ajouté en décalé / alkylaluminium dans le système catalytique) varie de 1/20 à 50/1, préférentiellement varie de 1/15 à 30/1 et encore plus préférentiellement de 1/10 à 20/1.

La quantité d'alkyle aluminium ajoutée est telle que dans le milieu de polymérisation, le rapport molaire de la quantité molaire totale d'aluminium, par rapport à la quantité molaire de sel de terre rare, notamment de sel de néodyme, soit toujours compris dans la gamme définie précédemment.

## Solvant de polymérisation

Selon une mise en œuvre de l'invention, la polymérisation s'effectue en masse. Dans ce cas il n'y a pas d'adjonction de solvant de polymérisation.

Selon d'autres mises en œuvre de l'invention, la polymérisation s'effectue en solution ou en semi-masse. Le milieu comprend alors un solvant de polymérisation hydrocarboné inerte, de préférence aliphatique ou alicyclique de faible masse moléculaire, notamment pour des raisons environnementales. On peut citer à titre d'exemple le n-pentane, l'isopentane, les isoamylènes (2-methyl-2-butène, 2-methyl-1-butène et 3 -methyl-1-butène), le 2,2-diméthylbutane, le 2,2-diméthyl-propane (neopentane), le n-heptane, le n-octane, l'iso-octane, le cyclopentane, le cyclohexane, le n-hexane, le méthylcyclopentane et le méthylcyclohexane, ainsi que les mélanges de ces composés, le n-pentane étant particulièrement préféré. On peut également citer à titre de solvant, les hydrocarbures aromatiques comme par exemple le benzène ou le toluène.

Le solvant peut être introduit directement dans le réacteur. Il peut également être mélangé préalablement à au moins un autre des composants introduits dans le réacteur de polymérisation, notamment au monomère à polymériser.

## Température de polymérisation

Une caractéristique importante du procédé de polymérisation de l'étape (a) est la température de polymérisation qui est supérieure à 40°C, rendant le procédé adapté à une mise en œuvre à l'échelle industrielle.

La température de polymérisation est comprise entre 40°C et 90°C, avantageusement comprise entre 40°C et 80°C, plus avantageusement comprise entre 45°C et 75°C, et varie avantageusement de 50°C à 70°C.

## II- ETAPE (b)

Selon l'invention, on ajoute à l'élastomère pseudo-vivant formé à l'étape (a), un composé polyfonctionnel.

Ce composé polyfonctionnel comprend au moins trois groupements fonctionnels et va ainsi permettre de lier entres elles plusieurs chaînes de polybutadiène. Avantageusement, ce composé polyfonctionnel comprend au moins quatre groupements fonctionnels.

Ce composé polyfonctionnel pourra être une petite molécule portant au moins trois, avantageusement au moins quatre, groupements fonctionnels ou un polymère portant ces au moins trois, avantageusement au moins quatre, groupements fonctionnels. Dans le composé polyfonctionnel, les groupements fonctionnels sont avantageusement identiques.

En outre, les groupements fonctionnels sont avantageusement identiques au groupement fonctionnel A de l'agent de fonctionnalisation décrit par la suite.

Le composé polyfonctionnel répond avantageusement à la formule $(E)_n$-$R_j$, avec n désignant un nombre entier supérieur ou égal à 3, E désignant ledit groupement fonctionnel, $R_j$ désignant un atome ou un groupe d'atomes portant les n groupements E.

Dans un premier mode de réalisation, $R_j$ est un radical hydrocarboné, linéaire, ramifié ou cyclique, et peut contenir un ou plusieurs radicaux aromatiques, et/ou un ou plusieurs hétéroatomes. Avantageusement $R_j$ comprend un ou plusieurs radicaux aromatiques. Outre les n substituants E, ledit radical $R_j$ peut éventuellement être substitué, pour autant que les autres substituants soient inertes vis-à-vis des extrémités réactives de l'élastomère pseudo-vivant.

Dans un deuxième mode de réalisation, $R_j$ est une chaine hydrocarbonée polymère. Avantageusement, dans l'un ou l'autre de ces modes de réalisation, $R_j$ ne comprend pas d'enchaînement Si-O-Si.

Le groupement fonctionnel E est avantageusement choisi parmi les époxydes, les glycidyloxy, les glycidylamino, les isocyanates, les imines, les aziridines, les imidazoles. Plus avantageusement, le groupement fonctionnel E est choisi parmi les glycidylamino, les isocyanates, les imines et les imidazoles.

Le composé polyfonctionnel est avantageusement choisi parmi le triglycidylaminophenol, le tétraglycidylaminodiphénylméthane (TGMDA), le N,N-Diglycidyl-4-glycidyloxyaniline, le Tris(4-hydroxyphenyl)methane triglycidyl ether, le 1,3-bis(N,N'-diglycidylaminomethyl)cyclohexane, le tétraglycidylxylenediamine, le polyméthylènepolyphénylpolyisocyanate, le tétra(isocyanato)silane (N° CAS : 3410-77-3), le phényltris(méthyléthylketoximio)silane (N° CAS : 34036-80-1), le poly[[1,3-bis[3-(4,5-dihydro-1H-imidazol-1-yl)propyl]-1,3 :1,3-disiloxanedylidene]-1,3-bis(oxy)] (N° CAS : 1325615-33-5).

Le rapport molaire composé polyfonctionnel / aluminium est avantageusement inférieur à 0,3, plus avantageusement compris entre 0,01 et 0,3.

Là encore, la quantité d'aluminium correspond à la quantité totale d'aluminium présent dans le milieu réactionnel en tenant compte de l'aluminium compris dans le système catalytique et, le cas échéant, de l'aluminium compris dans le composé alkylaluminium supplémentaire ajouté en décalé par rapport au système catalytique.

L'étape (b) de réaction d'au moins un composé polyfonctionnel avec la solution d'élastomère pseudo-vivant est avantageusement mise en œuvre à une température comprise entre 40°C et 90°C, plus avantageusement comprise entre 40°C et 80°C, encore plus avantageusement comprise entre 45°C et 75°C, et variant avantageusement de 50°C à 70°C.

### III- ETAPE (c)

Selon l'invention, à l'étape (c), on introduit un agent de fonctionnalisation susceptible de réagir avec l'élastomère pseudo-vivant de l'étape (b).

L'agent de fonctionnalisation répond à la formule A-Ri-B avec A désignant un groupement susceptible de réagir sur l'extrémité réactive de l'élastomère pseudo-vivant, Ri désignant un atome ou un groupe d'atomes formant une liaison entre A et B et B désignant une fonction susceptible de réagir avec une charge renforçante.

Le groupement Ri est de préférence un radical divalent hydrocarboné, linéaire, ramifié ou cyclique, et peut contenir un ou plusieurs radicaux aromatiques, et/ou un ou plusieurs hétéroatomes. Ledit radical Ri peut éventuellement être substitué, pour autant que les substituants soient inertes vis-à-vis des extrémités réactives de l'élastomère pseudo-vivant. Selon des variantes préférées, le groupement Ri désigne un radical hydrocarboné divalent aliphatique en $C_1$-$C_{18}$, avantageusement en $C_1$-$C_{10}$, plus avantageusement en $C_1$-$C_6$, plus avantageusement en $C_1$-$C_3$ ou en $C_2$-$C_8$, saturé ou non, cyclique ou non, pouvant contenir un ou plusieurs radicaux aromatiques. En particulier, $R_i$ est un radical divalent aliphatique en $C_1$-$C_3$. En particulier, $R_i$ est un radical divalent aliphatique en $C_2$-$C_8$.

Selon des variantes de l'invention, par groupement susceptible de réagir sur l'extrémité réactive de l'élastomère pseudo-vivant, on entend un groupement choisi parmi notamment les époxydes, les glycidyloxy, les glycidylamino, les isocyanates, les imines, les aziridines, les imidazoles. Plus avantageusement, le groupement susceptible de réagir sur l'extrémité réactive de l'élastomère pseudo-vivant est choisi parmi les glycidylamino, les isocyanates, les imines et les imidazoles.

Selon des variantes de l'invention, par fonction susceptible d'interagir avec une charge renforçante, on entend un groupe fonctionnel comprenant une ou plusieurs fonctions choisies parmi une amine primaire protégée ou non, secondaire protégée ou non ou tertiaire, une imine, une imide, une amide, un nitrile, un azo, un carbamate, un méthacrylate, un méthacrylamide, un hydroxyle, un carbonyle, un carboxyle, un époxy, un glycidyloxy, un thiol, un sulfure, un disulfure, un thiocarbonyle, un thioester, un sulfonyle, un silane, un silanol, un alcoxysilane, un alcoxydi-alkylsilane, un di-alcoxysilane, un di-alcoxyalkylsilane,un tri-alcoxysilane, un stannyle, un halogénure d'étain, un alkyle d'halogénure d'étain, un aryle d'halogénure d'étain, un polyéther, un hétérocycle azoté, un hétérocycle oxygéné, un hétérocycle soufré et un groupement aromatique substitué par les groupes précédemment cités.

On peut par exemple privilégier, selon certaines variantes, la fonction di-alcoxysilane, en particulier diéthoxysilane, en particulier un di-alcoxyalkylsilane tel qu'un diéthoxyalkylsilane, à titre de fonction susceptible d'interagir avec une charge renforçante.

Les différents aspects, préférentiels ou non, qui précèdent et qui concernent notamment la nature du groupement A, du groupement Ri et de la fonction B, sont combinables entre eux. Ainsi, en fonction des difficultés de synthèse et des disponibilités commerciales, mais surtout en fonction du type de charge renforçante envisagée en association avec l'élastomère modifié, l'homme du métier saura quelles combinaisons, notamment les de combinaisons des groupements A et B cités plus haut, sont particulièrement avantageuses.

A titre d'illustrations de ces variantes, on peut citer les agents de fonctionnalisation tel que le (3-glycidyloxypropyl) méthyldiéthoxysilane, le N-(3-diéthoxy(méthyl)silylpropyl)-4,5-dihydroimidazole, le 2-(3,4- époxycyclohexyl)éthyl méthyldiéthoxysilane, le tris(3-diéthoxy(méthyl)silylpropyl) isocyanurate, le 3-isocyanatopropylméthyldiéthoxysilane. Parmi ces agents de fonctionnalisation, le (3-glycidyloxypropyl) methyldiéthoxysilane et le 3-isocyanatopropylméthyldiéthoxysilane sont particulièrement avantageux.

Le rapport molaire agent de fonctionnalisation /aluminium est avantageusement d'au moins 1.

Selon des variantes de l'invention, le rapport molaire (agent de fonctionnalisation/aluminium) est d'au moins 1/1 et d'au plus 10/1, préférentiellement d'au plus 5/1, voire d'au plus 2/1.

Ainsi, par rapport à l'aluminium, le composé polyfonctionnel est en défaut alors que l'agent de fonctionnalisation est en quantité équimolaire ou en excès.

Là encore, la quantité d'aluminium correspond à la quantité totale d'aluminium présent dans le milieu réactionnel en tenant compte de l'aluminium compris dans le système catalytique et, le cas échéant, de l'aluminium compris dans le composé alkylaluminium supplémentaire ajouté en décalé par rapport au système catalytique.

Une caractéristique importante du procédé selon l'invention est l'ordre d'ajout des composé polyfonctionnel et agent de fonctionnalisation : le composé polyfonctionnel est ajouté avant introduction de l'agent de fonctionnalisation.

L'étape (c) de fonctionnalisation, est avantageusement mise en œuvre à une température comprise entre 40°C et 90°C, plus avantageusement comprise entre 40°C et 80°C, encore plus avantageusement comprise entre 45°C et 75°C, et variant avantageusement de 50°C à 70°C.

## IV- ETAPE (d)

A ce stade et selon une variante de l'invention, le procédé de synthèse d'un polybutadiène fonctionnalisé peut être poursuivi de manière connue en soi. Ainsi, selon une mise en oeuvre, il est possible d'injecter un stoppeur et un anti-oxydant à cette étape.

Le procédé se poursuit ensuite de manière connue en soi par la séparation et récupération du polybutadiène fonctionnalisé préparé. Le butadiène n'ayant pas réagi et/ou le solvant peuvent être éliminés, selon des méthodes connues de l'homme de l'art.

Le polybutadiène fonctionnalisé récupéré à l'issue de ces différentes étapes peut ensuite être conditionné de manière connue en soi, sous forme de balles par exemple.

Le procédé de l'invention permet de synthétiser par catalyse de coordination des polybutadiènes fonctionnalisé caractérisés par un taux molaire de cis d'au moins 90% par rapport au polybutadiène, et par un pourcentage moyen de chaînes fonctionnalisées d'au moins 40%.

## V- POLYBUTADIENE FONCTIONNALISE et COMPOSITIONS

L'invention a également pour objet un polybutadiène fonctionnalisé susceptible d'être obtenu par le procédé selon l'invention.

Le polybutadiène fonctionnalisé selon l'invention se caractérise notamment par :

- son taux molaire d'enchaînement d'unités 1,4- cis d'au moins 90% par rapport au polybutadiène ;
- son indice de polydispersité inférieur à 2,3 ;
- son pourcentage moyen de chaînes fonctionnalisées supérieur à 25%, avantageusement compris entre 25% et 80%. Dans un mode de réalisation, le polybutadiène fonctionnalisé a un pourcentage moyen de chaînes fonctionnalisées compris entre 25% et 60%. Dans un autre mode de réalisation, le polybutadiène fonctionnalisé a un pourcentage moyen de chaînes fonctionnalisées compris entre 40% et 80%, avantageusement entre 40% et 70%.

Le polybutadiène fonctionnalisé comprend des chaines libres de polybutadiène ayant réagi seulement avec l'agent de fonctionnalisation et des chaînes de polybutadiène liées entre elles via le composé polyfonctionnel.

Le polybutadiène fonctionnalisé se caractérise notamment par sa viscosité Mooney ML(1+4) à 100° C égale ou supérieure à 40, en particulier allant de 40 à 80.

Le polybutadiène fonctionnalisé présente un fluage réduit, qui peut se caractériser notamment par une valeur de cold-flow CF(1+6) à 100°C du polybutadiène fonctionnalisé inférieure à 1 g, plus avantageusement inférieure à 0,5 g, encore plus avantageusement inférieure à 0,2 g.

La présente invention a également pour objet une composition de caoutchouc comprenant un polybutadiène selon l'invention ou susceptible d'être obtenu par le procédé selon l'invention.

La composition de caoutchouc comprend avantageusement une charge renforçante, en particulier une charge inorganique telle que la silice, une charge organique telle que du noir de carbone ou encore des mélanges de charge inorganique et de charge organique, tels que des mélanges de silice et de noir de carbone.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices « Ultrasil 7000 » et « Ultrasil 7005 » de la société Evonik, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

L'homme du métier comprendra qu'à titre de charge équivalente de la silice décrite précédemment, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

Comme noirs de carbone conviennent tous les noirs de carbone, notamment les noirs conventionnellement utilisés dans les pneumatiques ou leurs bandes de roulement. Parmi ceux-ci, on citera plus particulièrement les noirs de carbone renforçants des séries 100, 200, 300, ou les noirs de série 500, 600 ou 700 (grades ASTM) , comme par exemple les noirs N115, N134, N234, N326, N330, N339, N347, N375, N550, N683, N772 pour n'en citer que certains. Ces noirs de carbone peuvent être utilisés tels que disponibles commercialement ou sous tout autre forme.

La composition de caoutchouc est avantageusement utilisable dans la fabrication d'un pneumatique, plus particulièrement pour la préparation de compositions pour bande de roulement.

## EXEMPLES

### Description des méthodes de mesures :

### Viscosité Mooney

Pour les polymères et les compositions de caoutchouc, les viscosités Mooney ML(1+4) 100°C sont mesurées selon la norme ASTM D 1646 (décembre 2015).

Un consistomètre oscillant est utilisé tel que décrit dans la norme ASTM D 1646. La mesure de plasticité Mooney se fait selon le principe suivant : l'élastomère ou la composition à l'état cru (i.e. avant cuisson) est moulé(e) dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML(1+4) est exprimée en "unité Mooney" (UM, avec 1 UM = 0,83 N.m).

La différence entre la viscosité Mooney de la composition et la viscosité Mooney de l'élastomère permet de mesurer la processabilité ou mise en œuvre à cru. Plus cette différence est faible, meilleure est la mise en œuvre à cru.

### Calorimétrie différentielle

Les températures de transition vitreuse (Tg) des élastomères sont déterminées à l'aide d'un calorimètre différentiel ("differential scanning calorimeter") avec une vitesse de balayage de 20°C/min.

### Spectroscopie proche infrarouge (NIR)

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN 13C. La microstructure sont alors calculés à partir du spectre NIR d'un film d'élastomère d'environ 730 $\mu$m d'épaisseur. L'acquisition du spectre est réalisée en mode transmission entre 4000 et 6200 cm-1 avec une résolution de 2 cm-1, à l'aide d'un spectromètre proche infrarouge à transformée de Fourier Bruker Tensor 37 équipé d'un détecteur InGaAs refroidi par effet Peltier.

**Viscosité inhérente**

La viscosité inhérente des élastomères à 25 °C est déterminée à partir d'une solution d'élastomère à 0,1 g.dL-1 dans le toluène, selon le principe suivant :
La viscosité inhérente est déterminée par la mesure du temps d'écoulement t de la solution de polymère et du temps d'écoulement to du toluène, dans un tube capillaire.

Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 g.dL-1 sont mesurés.

La viscosité inhérente est obtenue par la relation suivante :

$$\eta_{inh} = \frac{1}{C} ln\left[\frac{(t)}{(t_0)}\right]$$

avec :

C : concentration de la solution de polymère dans le toluène en g.dL$^{-1}$,
t : temps d'écoulement de la solution de polymère dans le toluène en seconde,
$t_0$ : temps d'écoulement du toluène en seconde,
$\eta_{inh}$ : viscosité inhérente exprimée en dL.g$^{-1}$.

**Cold-Flow (CF(1+6) 100°C) (fluage à froid)**

Il s'agit de mesurer la masse d'élastomère extrudée à travers une filière calibrée pendant un temps donné (6 heures) et dans des conditions fixées (T = 100 °C). La filière a un diamètre de 6,35 mm, une épaisseur de 0,5 mm et est située au fond et au centre d'une coupe cylindrique évidée de 52 mm de diamètre.

Dans ce dispositif sont placés 40 $\pm$ 4 g d'élastomère préalablement mis sous forme de pastille (2 cm d'épaisseur et 52 mm de diamètre). Sur la pastille d'élastomère est positionné un piston calibré de 1 kg ($\pm$ 5 g). L'ensemble est ensuite placé dans une étuve à 100 $\pm$ 0,5°C.

Les conditions n'étant pas stabilisées lors de la première heure dans l'étuve, le produit extrudé à t = 1 heure est découpé puis jeté.

La mesure est ensuite poursuivie pendant 6 heures $\pm$ 5 mn, durant lesquelles le produit est laissé dans l'étuve. A l'issue des 6 heures, l'échantillon de produit extrudé est découpé puis pesé. Le résultat de la mesure est la masse d'élastomère pesée, exprimée en g. Plus ce résultat est faible, plus l'élastomère résiste au fluage à froid.

**Détermination du nombre de fonctions, en mole par unité de masse du polymère : détermination de la quantité de (3-glycidyloxypropyl) méthyldiéthoxysilane (GMDE) greffé aux polybutadiènes obtenus.**

a) Principe :

Cette détermination est réalisée par une analyse RMN sur des échantillons coagulés.

Les spectres sont acquis sur un spectromètre Bruker Avance III HD 500 MHz équipé d'une sonde Bruker cryo-BBFO z-grad 5 mm

Les spectres RMN 1D 1H sont enregistrés à partir d'une expérience simple impulsion avec un angle de basculement de 30°, le nombre de répétitions est de 128 avec un délai de recyclage de 5 secondes.

Les expériences sont réalisées à 25 °C

b) <u>Préparation</u> échantillon :

25 mg d'échantillon sont solubilisés dans 1 mL de disulfure de carbone (CS2) ; 70 $\mu$L de cyclohexane deutéré (C6D12) sont ajoutés à la solution de polymère pour le verrouillage champ/fréquence du champ

c) Caractérisation :

Les spectres RMN contiennent les signaux caractéristiques des motifs Butadiène (BR1-4 et BR1-2). En plus de ceux-ci, des signaux isolés (de faible intensité) attribués à l'agent de fonctionnalisation, ici la molécule GMDE, sont observés. Les déplacements chimiques 1H des signaux caractéristiques de cette molécule dans la matrice BR sont présentés dans le tableau 1 ci-dessous :

$\delta$1H (ppm) Attribution
5.45 -CH=CH2 BR1-2
5.23 -CH=CH- BR1-4
4.85 -CH=CH2 BR1-2
3.61 -O-CH2-CH3 (GMDE)
0.00 -Si-CH3 (GMDE)
0.46 -Si-CH2- (GMDE)

Tableau 1 : Déplacements chimiques du GMDE observables dans la matrice BR

Les quantifications ont été effectuées à partir de l'intégration des spectres RMN 1D 1H à l'aide du logiciel Topspin.

Les zones d'intégration considérées pour la quantification sont :

☐ A : entre 5,5 ppm et 5,0 ppm correspondant à 2 protons du BR1-4 et 1 proton du BR1-2,
☐ B : entre 5,5 et 4,75 ppm correspondant à 2 protons du BR1-2
☐ C : entre 3,66 et 3,56 ppm correspondant à 2 protons du GMDE (Motif-O-CH2-CH3)
☐ D : entre 0.02 et -0.10 ppm correspondant à 3 proton du GMDE (motif - Si-CH3)

La quantification de la microstructure peut être réalisée en pourcentage molaire comme suit :

% molaire d'un motif = intégrale 1H d'un motif * 100 / Σ (intégrales 1H de chaque motif).

Avec :

Intégrale 1H motif BR1-4 = (A-(B/2))/2
Intégrale 1H motif BR1-2 = B/2
Intégrale 1H motif -O-CH2-CH3 GMDE = C/2
Intégrale 1H motif -Si-CH3 GMDE = D/3

A l'aide de l'intégration du spectre RMN 1D 1H de la partie purifiée de l'échantillon : la quantification du motif GMDE greffé peut être réalisée en pourcentage molaire comme décrit ci-dessus.

**Détermination de la distribution des masses molaires des polybutadiènes obtenus par la technique de chromatographie d'exclusion stérique (SEC).**

a) Principe de la mesure:

La chromatographie d'exclusion stérique ou SEC (size exclusion chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.
Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

b) Préparation du polymère:

Il n'y a pas de traitement particulier de l'échantillon de polymère avant analyse. Celui-ci est simplement solubilisé dans du tétrahydrofurane à une concentration d'environ 1 g/l.

c) Analyse SEC:

Cas c1) L'appareillage utilisé est une chaîne chromatographique « WATERS alliance ». Le solvant d'élution est le tétrahydrofurane, le débit de 1 ml/min., la température du système de 35° C et la durée d'analyse de 30 min. On utilise un jeu de deux colonnes WATERS de dénomination commerciale « STYRAGEL HT6E ».
Le volume injecté de la solution de l'échantillon de polymère est 100 $\mu$l. Le détecteur est un réfractomètre différentiel « WATERS 2140 » et le logiciel d'exploitation des données chromatographiques est le système « WATERS MILLENIUM ».
Cas c2) L'appareillage utilisé est un chromatographe « WATERS alliance ». Le solvant d'élution est le tétrahydrofurane, le débit de 0,7 ml/mn, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».
Le volume injecté de la solution de l'échantillon de polymère est 100 $\mu$l. Le détecteur est un réfractomètre différentiel « WATERS modèle RI32X » et le logiciel d'exploitation des données chromatographiques est le système « WATERS MILLENIUM ».

**Synthèse du système catalytique**

**Nd/Bd/HDiBA/CDEA**

Le système catalytique Nd/Bd/HDiBA/CDEA dilué dans le MCH est synthétisé selon le mode opératoire décrit dans WO-A-02/38636 (pages 8 à 11) :
En vue de l'obtention de ce catalyseur, le sel de phosphate de néodyme à l'état de poudre est introduit dans un réacteur préalablement nettoyé de ses impuretés. Ce sel est ensuite soumis à un barbotage à l'azote pendant 10 min dans le but de rendre le milieu réactionnel inerte. Les étapes successives suivantes sont ensuite réalisées :

- Première étape de solvatation :
  Un solvant constitué de MCH préalablement distillé, purifié sur alumines et barboté à l'azote est introduit dans le réacteur. En vue de la formation d'un gel, la durée et la température de mise en contact de ce solvant et du sel de néodyme sont de 30 min à 30°C sous agitation.
- Seconde étape d'addition du monomère : Le butadiène préalablement purifié sur alumines et barboté à l'azote est ensuite introduit dans le réacteur à 30°C. Ce monomère servira à préformer le catalyseur lors de l'étape de vieillissement.
- Troisième étape d'alkylation : L'HDiBA en solution dans le MCH est ensuite introduit dans le réacteur à titre d'agent d'alkylation du sel de néodyme, selon une concentration d'environ 1 mol/L. La durée de l'alkylation est de 15 min. La température de la réaction d'alkylation est égale à 30° C.
- Quatrième étape d'halogénation :
  Le CDEA en solution dans le MCH est ensuite introduit dans le réacteur à titre de donneur d'halogène, selon une concentration d'environ 0,5 mol/L. La température du milieu réactionnel est portée à 60° C.
- Cinquième étape de vieillissement :
  Le mélange ainsi obtenu est vieilli en maintenant la température de 60° C pendant une durée de 50 min.

La solution catalytique obtenue est finalement stockée sous atmosphère d'azote à une température comprise entre -15° C et -5 ° C.
Le système catalytique est caractérisé par sa formule catalytique qui est donnée sous la forme Nd/Monomère/Agent Alkylant/Agent halogénant en rapports molaires indexés sur le sel de néodyme. Dans les exemples, la formule catalytique est 1/36/3/2,6 avec une concentration en néodyme de 0,038 mol/L.

**Exemples :**

Dans ces exemples, les termes « Al total » sont utilisés pour définir la quantité totale d'aluminium présent dans le milieu réactionnel.

Exemple comparatif 1 (C1) :

Dans un réacteur alimenté en continu agité de 32 L, supposé parfaitement agité selon l'homme de l'art, sont introduits en continu du méthylcyclohexane et du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 150 µmol de HDIBA pour 100 g de butadiène et 600 µmol du système catalytique décrit précédemment pour 100g de butadiène sont introduits.

Les différents débits sont calculés afin que le temps de séjour moyen dans le réacteur soit de 25 min. La température est maintenue à 50 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2.20 dL.g$^{-1}$. La masse molaire moyenne en nombre, Mn, déterminée par la technique de SEC, est de 90 000 g.mol$^{-1}$ et l'indice de polymolécularité, Ip, est de 1,90.

En sortie du réacteur de polymérisation, à une température au moins égale à la température de polymérisation, 4900 µmol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(AI total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,20 dL.g$^{-1}$.

La viscosité Mooney de ce polymère C1 est de 22.

La microstructure de ce polymère est déterminée par la méthode NIR. Le taux de motifs 1,4-cis est de 93,5 % par rapport à la masse de polymère.

La température de transition vitreuse de ce polymère est de -107°C.

Le cold-flow CF(1+6)100°C du polymère est de 1,678.

Le nombre de fonctions mesuré par RMN $^1$H est de 3,9 mmol/kg soit un pourcentage moyen de chaînes fonctionnalisées de 57%.


Exemple comparatif 2 (C2) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 150 µmol de HDIBA pour 100 g de butadiène et 407 µmol du système catalytique décrit précédemment pour 100g de butadiène sont introduits.

Les différents débits sont calculés afin que le temps de séjour moyen dans le réacteur soit de 25 min. La température est maintenue à 50 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100°C. La viscosité inhérente "initiale" mesurée est de 2.62 dL.g$^{-1}$. La masse molaire moyenne en nombre, Mn, déterminée par la technique de SEC, est de 182300 g.mol$^{-1}$ et l'indice de polymolécularité, Ip, est de 1,80.

En sortie du réacteur de polymérisation, à une température au moins égale à la température de polymérisation, 3200 µmol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(AI total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,62 dL.g$^{-1}$.

La viscosité Mooney de ce polymère C2 est de 39.

La microstructure de ce polymère est déterminée par la méthode NIR. Le taux de motifs 1,4-cis est de 96,4 % par rapport à la masse de polymère.

La température de transition vitreuse de ce polymère est de -108°C.

Le cold-flow CF(1+6)100°C du polymère est de 1,269.

Le nombre de fonctions mesuré par RMN $^1$H est de 2,74 mmol/kg soit un pourcentage moyen de chaînes fonctionnalisées de 50%.

Exemple comparatif 3 (C3) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 230 μmol de HDIBA pour 100 g de butadiène et 450 μmol du système catalytique décrit précédemment pour 100g de butadiène sont introduits.

Les différents débits sont calculés afin que le temps de séjour moyen dans le réacteur soit de 25 min. La température est maintenue à 50 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2.30 dL.g$^{-1}$. La masse molaire moyenne en nombre, Mn, déterminée par la technique de SEC, est de 150400 g.mol$^{-1}$ et l'indice de polymolécularité, Ip, est de 1,80.

En sortie du réacteur de polymérisation, à une température au moins égale à la température de polymérisation, 2600 μmol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,30 dL.g$^{-1}$.

La viscosité Mooney de ce polymère C3 est de 24.

La microstructure de ce polymère est déterminée par la méthode NIR. Le taux de motifs 1,4-cis est de 98,2 % par rapport à la masse de polymère.

La température de transition vitreuse de ce polymère est de -108°C.

Le cold-flow CF(1+6)100°C du polymère est de 1,712.

Le nombre de fonctions mesuré par RMN $^1$H est de 2,52 mmol/kg soit un pourcentage moyen de chaînes fonctionnalisées de 38%.

Exemple comparatif 4 (C4) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 250 μmol de HDIBA pour 100 g de butadiène et 238 μmol du système catalytique décrit précédemment pour 100g de butadiène sont introduits.

Les différents débits sont calculés afin que le temps de séjour moyen dans le réacteur soit de 25 min. La température est maintenue à 50°C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100°C. La viscosité inhérente "initiale" mesurée est de 2,82 dL.g$^{-1}$. La masse molaire moyenne en nombre, Mn, déterminée par la technique de SEC, est de 195000 g.mol$^{-1}$ et l'indice de polymolécularité, Ip, est de 1,80.

En sortie du réacteur de polymérisation, à une température au moins égale à la température de polymérisation, 2300 $\mu$mol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,82 dL.g$^{-1}$.

La viscosité Mooney de ce polymère C4 est de 37.

La microstructure de ce polymère est déterminée par la méthode NIR. Le taux de motifs 1,4-cis est de 98,6 % par rapport à la masse de polymère.

La température de transition vitreuse de ce polymère est de -108°C.

Le cold-flow CF(1+6)100°C du polymère est de 1,156.

Le nombre de fonctions mesuré par RMN $^1$H est de 1,90 mmol/kg soit un pourcentage moyen de chaînes fonctionnalisées de 37%.

Exemple 1 (I1) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 150 $\mu$mol de HDIBA pour 100 g de butadiène et 600 $\mu$mol du système catalytique décrit précédemment pour 100g de butadiène sont introduits.

Les différents débits sont calculés afin que le temps de séjour moyen dans le réacteur soit de 25 min. La température est maintenue à 50 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2,13 dL.g$^{-1}$. La masse molaire moyenne en nombre, Mn, déterminée par la technique de SEC, est de 140470 g.mol$^{-1}$ et l'indice de polymolécularité, Ip, est de 1,90.

En sortie du réacteur de polymérisation, à une température au moins égale à la température de polymérisation, 202 $\mu$mol pour 100 g de butadiène de 4,4'-Methylenebis(N,N-diglycidylaniline) en solution dans le toluène sont ajoutés à la solution de polymère vivant avec un ratio molaire (4,4'-Methylenebis(N,N-diglycidylaniline))/(Al total) de 0,10. Dans un second temps 4600 $\mu$mol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,42 dL.g$^{-1}$.

La viscosité Mooney de ce polymère I1 est de 42.

La microstructure de ce polymère est déterminée par la méthode NIR. Le taux de motifs 1,4-cis est de 93,6 % par rapport à la masse de polymère.

La température de transition vitreuse de ce polymère est de -107°C.

Le cold-flow CF(1+6)100°C du polymère est de 0,20.

Le nombre de fonctions mesuré par RMN $^1$H est de 3,84 mmol/kg soit un pourcentage moyen de chaînes fonctionnalisées de 54%.

Exemple comparatif 5 (C5) : co-injection GMDE/TGMDA

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 150 $\mu$mol de HDIBA pour 100 g de butadiène et 600 $\mu$mol du système catalytique décrit précédemment pour 100g de butadiène sont introduits.

Les différents débits sont calculés afin que le temps de séjour moyen dans le réacteur soit de 25 min. La température est maintenue à 50 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2,15 dL.g$^{-1}$. La masse molaire moyenne en nombre, Mn, déterminée par la technique de SEC, est de 146170 g.mol$^{-1}$ et l'indice de polymolécularité, Ip, est de 1,80.

En sortie du réacteur de polymérisation, à une température au moins égale à la température de polymérisation, 202 $\mu$mol pour 100 g de butadiène de 4,4'-Methylenebis(N,N-diglycidylaniline) en solution dans le toluène sont ajoutés à la solution de polymère vivant avec un ratio molaire (4,4'-Methylenebis(N,N-diglycidylaniline))/(Al total) de 0,10. Dans le même temps 4600 $\mu$mol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,20 dL.g$^{-1}$.

La viscosité Mooney de ce polymère C5 est de 22.

La microstructure de ce polymère est déterminée par la méthode NIR. Le taux de motifs 1,4-cis est de 93,4 % par rapport à la masse de polymère.

La température de transition vitreuse de ce polymère est de -107°C.

Le cold-flow CF(1+6)100°C du polymère est de 1,650.

Le nombre de fonctions mesuré par RMN $^1$H est de 3,63 mmol/kg soit un pourcentage moyen de chaînes fonctionnalisées de 53%.

Exemple comparatif 6 (C6) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 50 $\mu$mol de HDIBA pour 100 g de butadiène et 530$\mu$mol du système catalytique décrit précédemment pour 100g de butadiène sont introduits.

Les différents débits sont calculés afin que le temps de séjour moyen dans le réacteur soit de 25 min. La température est maintenue à 70 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2,20 dL.g$^{-1}$. La masse molaire moyenne en nombre, Mn, déterminée par la technique de SEC, est de 146170 g.mol$^{-1}$ et l'indice de polymolécularité, Ip, est de 1, 80.

En sortie du réacteur de polymérisation, à une température au moins égale à la température de polymérisation, 4200 $\mu$mol pour 100 g de butadiène de (3-glycidyloxypropyl) méethyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,20 dL.g$^{-1}$.

La viscosité Mooney de ce polymère C6 est de 22.

La microstructure de ce polymère est déterminée par la méthode NIR. Le taux de motifs 1,4-cis est de 92 % par rapport à la masse de polymère.

La température de transition vitreuse de ce polymère est de -107°C.

Le cold-flow CF(1+6)100°C du polymère est de 1,710.

Le nombre de fonctions mesuré par RMN $^1$H est de 3,15 mmol/kg soit un pourcentage moyen de chaînes fonctionnalisées de 46%.

Exemple 2 (I2):

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 50 μmol de HDIBA pour 100 g de butadiène et 530 μmol du système catalytique décrit précédemment pour 100g de butadiène sont introduits.

Les différents débits sont calculés afin que le temps de séjour moyen dans le réacteur soit de 25 min. La température est maintenue à 70 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2,20 dL.g$^{-1}$. La masse molaire moyenne en nombre, Mn, déterminée par la technique de SEC, est de 146170 g.mol$^{-1}$ et l'indice de polymolécularité, Ip, est de 1,80.

En sortie du réacteur de polymérisation, à une température au moins égale à la température de polymérisation, 202 μmol pour 100 g de butadiène de 4,4'-Methylenebis(N,N-diglycidylaniline) en solution dans le toluène sont ajoutés à la solution de polymère vivant avec un ratio molaire (4,4'-Methylenebis(N,N-diglycidylaniline))/(Al total) de 0,10. Dans un second temps 4200 μmol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,31 dL.g$^{-1}$.

La viscosité Mooney de ce polymère I2 est de 27.

La microstructure de ce polymère est déterminée par la méthode NIR. Le taux de motifs 1,4-cis est de 92.8 % par rapport à la masse de polymère.

La température de transition vitreuse de ce polymère est de -107°C.

Le cold-flow CF(1+6)100°C du polymère est de 0.10.

Le nombre de fonctions mesuré par RMN $^1$H est de 3,20 mmol/kg soit un pourcentage moyen de chaînes fonctionnalisées de 40%.

Exemple comparatif 7 (C7) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 180 μmol de HDIBA pour 100 g de monomère et 340 μmol du système catalytique décrit précédemment pour 100g de monomère sont introduits.

Les différents débits sont calculés afin que le temps de séjour moyen dans le réacteur soit de 25 min. La température est maintenue à 80 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2.10 dL.g$^{-1}$. La masse molaire moyenne en nombre, Mn, déterminée par la technique de SEC, est de 150400 g.mol$^{-1}$ et l'indice de polymolécularité, Ip, est de 1,80.

En sortie du réacteur de polymérisation, à une température au moins égale à la température de polymérisation, 3700 μmol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,17 dL.g$^{-1}$.

La viscosité Mooney de ce polymère C7 est de 24.

La microstructure de ce polymère est déterminée par la méthode NIR. Le taux de motifs 1,4-cis est de 94,2 % par rapport à la masse de polymère.

La température de transition vitreuse de ce polymère est de -107°C.

Le cold-flow CF(1+6)100°C du polymère est de 1,560.

Le nombre de fonctions mesuré par RMN $^1$H est de 1,86 mmol/kg soit un pourcentage moyen de chaînes fonctionnalisées de 28%.

Exemple comparatif 8 (C8) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 180 μmol de HDIBA pour 100 g de monomère et 340 μmol du système catalytique décrit précédemment pour 100g de monomère sont introduits.

Les différents débits sont calculés afin que le temps de séjour moyen dans le réacteur soit de 25 min. La température est maintenue à 90 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2.15 dL.g$^{-1}$. La masse molaire moyenne en nombre, Mn, déterminée par la technique de SEC, est de 149000 g.mol$^{-1}$ et l'indice de polymolécularité, Ip, est de 1,90.

En sortie du réacteur de polymérisation, à une température au moins égale à la température de polymérisation, 3700 μmol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,15 dL.g$^{-1}$.

La viscosité Mooney de ce polymère C8 est de 23.

La microstructure de ce polymère est déterminée par la méthode NIR. Le taux de motifs 1,4-cis est de 94 % par rapport à la masse de polymère.

La température de transition vitreuse de ce polymère est de -107°C.

Le cold-flow CF(1+6)100°C du polymère est de 1,40.

Le nombre de fonctions mesuré par RMN $^1$H est non détectable.

Exemple 3 (13) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 150 μmol de HDIBA pour 100 g de butadiène et 600 μmol du système catalytique décrit précédemment pour 100g de butadiène sont introduits.

Les différents débits sont calculés afin que le temps de séjour moyen dans le réacteur soit de 25 min. La température est maintenue à 50 °C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2.21 dL.g$^{-1}$. La masse molaire moyenne en nombre, Mn, déterminée par la technique de SEC, est de 147290 g.mol$^{-1}$ et l'indice de polymolécularité, Ip, est de 1,90.

En sortie du réacteur de polymérisation, à une température au moins égale à la température de polymérisation, 102 μmol pour 100 g de butadiène de 4,4'-Methylenebis(N,N-diglycidylaniline) en solution dans le toluène sont ajoutés à la solution de polymère vivant avec un ratio molaire (4,4'-Methylenebis(N,N-diglycidylaniline))/(Al total) de 0,10. Dans un second temps 4800 μmol pour 100 g de butadiène de (3-glycidyloxypropyl) méthyldiéthoxysilane en solution dans le méthylcyclohexane sont ajoutés à la solution de polymère vivant selon un ratio molaire ((3-glycidyloxypropyl) méthyldiéthoxysilane)/(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,40 dL.g$^{-1}$.

La viscosité Mooney de ce polymère I3 est de 40.

La microstructure de ce polymère est déterminée par la méthode NIR. Le taux de motifs 1,4-cis est de 94% par rapport à la masse de polymère.

La température de transition vitreuse de ce polymère est de -107°C.

Le cold-flow CF(1+6)100°C du polymère est de 0,18.

Le nombre de fonctions mesuré par RMN $^1$H est de 3,66 mmol/kg soit un pourcentage moyen de chaînes fonctionnalisées de 54%.

Exemple 4 (14) :

Dans un réacteur alimenté en continu agité de 32 L, supposé parfaitement agité selon l'homme de l'art, sont introduits en continu du méthylcyclohexane, du butadiène. Le débit massique en butadiène est de 5,30 kg.h$^{-1}$ et la concentration massique en butadiène dans le mélange méthylcyclohexane/butadiène est de 9% en poids.

De l'hydrure de diisobutylaluminium (HDIBA) est introduit en quantité suffisante afin de neutraliser les impuretés protiques apportées par les différents constituants présents dans l'entrée du premier réacteur. À l'entrée du réacteur, 150 μmol de HDIBA pour 100 g de butadiène et 600 μmol du système catalytique décrit précédemment pour 100g de butadiène sont introduits.

Les différents débits sont calculés afin que le temps de séjour moyen dans le réacteur soit de 25 min. La température est maintenue à 50°C.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 2.23 dL.g$^{-1}$. La masse molaire moyenne en nombre, Mn, déterminée par la technique de SEC, est de 149000 g.mol$^{-1}$ et l'indice de polymolécularité, Ip, est de 1,80.

En sortie du réacteur de polymérisation, à une température au moins égale à la température de polymérisation, 102 μmol pour 100 g de butadiène de 4,4'-Methylenebis(N,N-diglycidylaniline) en solution dans le toluène sont ajoutés à la solution de polymère vivant avec un ratio molaire (4,4'-Methylenebis(N,N-diglycidylaniline))/(Al total) de 0,10. Dans un second temps 4800 μmol, pour 100 g de butadiène, de 3-isocyanatopropylméthyldiéthoxysilane en solution dans le méthylcyclohexane sont ajoutés à la solution de polymère vivant selon un ratio molaire (3-isocyanatopropylméthyldiéthoxysilane) /(Al total) de 2,5.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100°C.

La viscosité inhérente "finale" mesurée est de 2,48 dL.g$^{-1}$.

La viscosité Mooney de ce polymère I4 est de 44.

La microstructure de ce polymère est déterminée par la méthode NIR. Le taux de motifs 1,4-cis est de 94% par rapport à la masse de polymère.

La température de transition vitreuse de ce polymère est de -107°C.

Le cold-flow CF(1+6)100°C du polymère est de 0,063.

Le nombre de fonctions mesuré par RMN $^1$H est de 3,66 mmol/kg soit un pourcentage moyen de chaînes fonctionnalisées de 54%.

La comparaison des exemples comparatif 1 et comparatif 2 versus les exemples comparatif 3 et comparatif 4 montre qu'il est préférable quel que soit la masse molaire obtenue d'avoir un rapport Al Total/sel de Nd le plus faible possible pour obtenir un taux de chaînes fonctionnalisées élevé.

La comparaison des exemples 1 et comparatif 5 montre qu'il est préférable d'ajouter le composé polyfonctionnel avant l'agent de fonctionnalisation pour obtenir un taux de chaînes fonctionnalisées élevé et un fluage réduit.

La comparaison des exemples comparatif 1, comparatif 6 et comparatif 7 et comparatif 8 montre l'impact de la température de polymérisation sur le taux de chaînes fonctionnalisées.

La comparaison des exemples comparatif 1 et 3 ou des exemples comparatif 6 et 2 montre l'effet bénéfique de l'ajout d'un composé polyfonctionnel pour obtenir un fluage réduit et conserver un taux de chaînes fonctionnalisées élevé.

| | C1 | C2 | C3 | C4 | I1 | C5 | C6 | I2 | C7 | C8 | I3 | I4 |
|---|---|---|---|---|---|---|---|---|---|---|---|---|
| Concentration en Nd ($\mu$mcm) | 600 | 407 | 230 | 238 | 600 | 600 | 530 | 530 | 340 | 340 | 600 | 600 |
| Ratio Al total*/Nd | 3,2 | 3,4 | 5 | 5 | 3,2 | 3,2 | 3,2 | 3,2 | 3,5 | 3,2 | 3,2 | 3,2 |
| Température de polymérisation (°C) | 50 | 50 | 50 | 50 | 50 | 50 | 70 | 70 | 80 | 90 | 50 | 50 |
| Viscosité inhérente initiale (dL/g) | 2,20 | 2,62 | 2,30 | 2,82 | 2,13 | 2,15 | 2,20 | 2,20 | 2,10 | 2,10 | 2,21 | 2,23 |
| Agent de fonction nalisation/Al total | 2,5 | 2,5 | 2,5 | 2,5 | 2,5 | 2,5 | 2,5 | 2,5 | 2,5 | 2,5 | 2,5 | 2,5 |
| Composé polyfonctionnel/Al total | 0 | 0 | 0 | 0 | 0,10 | 0,10 | 0 | 0,10 | 0 | 0 | 0,05 | 0,05 |
| Viscosité inhérente finale (dL/g) | 2,20 | 2,62 | 2,30 | 2,82 | 2,42 | 2,20 | 2,20 | 2,31 | 2,17 | 2,15 | 2,40 | 2,48 |
| Mooney final | 22 | 39 | 24 | 45 | 42 | 22 | 22 | 27 | 24 | 23 | 40 | 44 |
| Mn (g/mol)-Ip initiale | 146170 - 1,8 | 182300 - 1,8 | 150400 - 1,8 | 195000 - 1,8 | 140470 -1,9 | 146170 - 1,8 | 145800 - 1,8 | 147100 - 1,8 | 150400 - 1,8 | 150000 -1,9 | 147290 - 1,8 | 149000 - 1,8 |
| % moyen de chaines fonctionnalisées** | 57 | 50 | 38 | 37 | 54 | 53 | 46 | 40 | 28 | 0 | 54 | 58 |
| Nombre de fonction (mmol/kg) | 3,9 | 2,74 | 2,52 | 1,90 | 3,84 | 3,63 | 3,15 | 3,20 | 1,86 | ND | 3,66 | 3,89 |
| % 1,4-cis | 93,5 | 96,4 | 98,2 | 98,6 | 93,6 | 93,4 | 92 | 92,8 | 94,2 | 94 | 94 | 94 |
| Tg (°C) | -107 | -108 | -108 | -108 | -107 | -107 | -107 | -107 | -107 | -107 | -107 | -107 |
| Cold Flow (g/6h) | 1,678 | 1,269 | 1,712 | 1,156 | 0,20 | 1,650 | 1,710 | 0,10 | 1,562 | 1,400 | 0,18 | 0,063 |

* L'Al total est calculé en prenant en compte l'HDIBA du catalyseur (ratio Nd/Al de 3) et l'HDIBA ajouté dans la réaction de polymérisation.

**Le pourcentage moyen de chaines fonctionnalisées (en %) est obtenu par la formule : $(CH_2\text{-}Si/PB)*Mn*1.10\text{-}4$ avec $CH_2\text{-}Si/PB$ en mmol/Kg et Mn en $g.mol^{-1}$.

**Revendications**

1. Procédé de préparation d'un polybutadiène fonctionnalisé **caractérisé en ce qu'**il comprend les étapes suivantes :

   a) homopolymériser du butadiène à l'aide d'un système catalytique pour former un élastomère pseudo-vivant, ledit système catalytique étant à base d'au moins :

   - Un monomère diène conjugué,
   - Un sel d'un ou plusieurs métaux de terre rare d'un acide phosphorique organique,
   - Un agent d'alkylation comprenant de l'aluminium, et
   - Un donneur d'halogène comprenant un halogénure d'alkylaluminium,

   ledit sel est en suspension ou en solution dans au moins un solvant hydrocarboné inerte et saturé de type aliphatique ou alicyclique ;
   b) Ajouter à l'élastomère pseudo-vivant formé à l'étape (a) un composé polyfonctionnel, comprenant au moins trois groupements fonctionnels, ledit groupement fonctionnel étant susceptible de réagir sur l'extrémité réactive de l'élastomère pseudo-vivant;
   c) Ajouter au mélange formé à l'étape (b) un agent de fonctionnalisation répondant à la formule A-$R_i$-B avec A désignant un groupement susceptible de réagir sur l'extrémité réactive de l'élastomère pseudo-vivant, $R_i$ désignant un atome ou un groupe d'atomes formant une liaison entre A et B, et B désignant une fonction susceptible de réagir avec une charge renforçante ;
   d) Récupérer le polybutadiène fonctionnalisé ;

   et **en ce que** dans le milieu de polymérisation, la quantité molaire totale d'aluminium est telle que le rapport molaire (aluminium/ sel de terre rare) présente une valeur comprise entre 1 et 5 et **en ce que** la polymérisation est conduite à une température comprise entre 40°C et 90°C.

2. Procédé selon la revendication 1, **caractérisé en ce que**, dans le système catalytique, le rapport molaire (aluminium/ sel de terre rare) présente une valeur comprise entre 1 et 4, avantageusement allant de 2,5 à 3,8.

3. Procédé selon l'une quelconque des revendications précédentes, **caractérisé en ce que** la polymérisation est conduite à une température comprise entre 45°C et 75°C.

4. Procédé selon l'une quelconque des revendications précédentes, **caractérisé en ce que**, dans le système catalytique, ledit sel est le tris [bis (2-éthylhexyl) phosphate] de néodyme

5. Procédé selon l'une quelconque des revendications précédentes, **caractérisé en ce que** le rapport molaire agent de fonctionnalisation /aluminium est avantageusement d'au moins 1.

6. Procédé selon l'une quelconque des revendications précédentes, **caractérisé en ce que** pour l'agent de fonctionnalisation de formule A-$R_i$-B, A est choisi parmi les glycidylamino, les isocyanates, les imines et les imidazoles.

7. Procédé selon l'une quelconque des revendications précédentes, **caractérisé en ce que** pour l'agent de fonctionnalisation de formule A-$R_i$-B, B est un dialkoxysilane, avantageusement un diéthoxy-silane.

8. Procédé selon l'une quelconque des revendications précédentes, **caractérisé en ce que** pour l'agent de fonctionnalisation de formule A-$R_i$-B, $R_i$ est un radical divalent aliphatique en $C_1$-$C_{10}$.

9. Procédé selon l'une quelconque des revendications précédentes, **caractérisé en ce que** le rapport molaire composé polyfonctionnel / aluminium est inférieur à 0,3.

10. Procédé selon l'une quelconque des revendications précédentes, **caractérisé en ce que** le composé polyfonctionnel répond à la formule $(E)_n$-$R_j$, avec n désignant un nombre entier supérieur ou égal à 3, E désignant ledit groupement fonctionnel et $R_j$ désignant un atome ou un groupe d'atomes portant les n groupements E.

11. Procédé selon l'une quelconque des revendications précédentes, **caractérisé en ce que** dans le composé polyfonctionnel, ledit groupement fonctionnel est choisi parmi les glycidylamino, les isocyanates, les imines et les imidazoles.

12. Procédé selon l'une quelconque des revendications précédentes, **caractérisé en ce que** le composé polyfonctionnel est le tétraglycidylaminodiphénylméthane.

13. Polybutadiène fonctionnalisé susceptible d'être obtenu par le procédé selon l'une quelconque des revendications précédentes, comprenant des chaines libres de polybutadiène ayant réagi seulement avec l'agent de fonctionnalisation et des chaînes de polybutadiène liées entre elles via le composé polyfonctionnel et **caractérisé par**

   - son taux molaire d'enchaînement d'unités 1,4- cis d'au moins 90% par rapport au polybutadiène ;
   - son indice de polydispersité inférieur à 2,3 ;
   - son pourcentage moyen de chaînes fonctionnalisées supérieur à 25% ;
   - sa viscosité Mooney ML(1+4) à 100° C égale ou supérieure à 40 ;
   - sa valeur de cold-flow CF(1+6) à 100°C inférieure à 1 g, plus avantageusement inférieure à 0,5 g.

14. Polybutadiène fonctionnalisé selon la revendication 13 ayant un taux moyen de chaînes fonctionnalisées compris entre 25% et 60%.

15. Polybutadiène fonctionnalisé selon la revendication 13 ayant un taux moyen de chaînes fonctionnalisées compris entre 40% et 80%.

16. Composition de caoutchouc comprenant un polybutadiène fonctionnalisé selon l'une quelconque des revendications 13 à 15 et une charge inorganique renforçante.

**Patentansprüche**

1. Verfahren zur Herstellung eines funktionalisierten Polybutadiens, **dadurch gekennzeichnet, dass** es die folgenden Schritte umfasst:

   a) Homopolymerisieren von Butadien mit Hilfe eines katalytischen Systems zur Bildung eines pseudo-lebenden Elastomers, wobei das katalytische System mindestens auf

   - einem konjugierten Dienmonomer,
   - einem Salz einer organischen Phosphonsäure mit einem oder mehreren Seltenerdmetallen,
   - einem aluminiumhaltigen Alkylierungsmittel und
   - einem Halogendonor, der ein Alkylaluminiumhalogenid umfasst,

   basiert,
   das Salz in Suspension oder in Lösung in mindestens einem gesättigten inerten Kohlenwasserstoff-Lösungsmittel vom aliphatischen oder alicyclischen Typ vorliegt;
   b) Zugeben einer polyfunktionellen Verbindung mit mindestens drei funktionellen Gruppen zu dem in Schritt (a) gebildeten pseudo-lebenden Elastomer, wobei die funktionelle Gruppe mit dem reaktiven Ende des pseudo-lebenden Elastomers reagieren kann;
   c) Zugeben eines Funktionalisierungsmittels der Formel A-$R_i$-B zu der in Schritt (b) gebildeten Mischung, wobei A für eine Gruppe steht, die mit dem reaktiven Ende des pseudo-lebenden Elastomers reagieren kann, $R_i$ für ein Atom oder eine Gruppe von Atomen, das bzw. die eine Bindung zwischen A und B bildet, und B für eine Funktion steht, die mit einem verstärkenden Füllstoff reagieren kann;
   d) Gewinnen des funktionalisierten Polybutadiens; und dass die gesamte molare Menge an Aluminium in dem Polymerisationsmedium der Art beschaffen ist, dass das Molverhältnis (Aluminium/Seltenerdmetallsalz) einen Wert zwischen 1 und 5 hat und dass die Polymerisation bei einer Temperatur zwischen 40 °C und 90 °C durchgeführt wird.

2. Verfahren nach Anspruch 1, **dadurch gekennzeichnet, dass** in dem katalytischen System das Molverhältnis (Aluminium/Seltenerdmetallsalz) einen Wert zwischen 1 und 4, vorteilhafterweise im Bereich von 2,5 bis 3,8, hat.

3. Verfahren nach einem der vorhergehenden Ansprüche, **dadurch gekennzeichnet, dass** die Polymerisation bei einer Temperatur zwischen 45 °C und 75 °C durchgeführt wird.

4. Verfahren nach einem der vorhergehenden Ansprüche, **dadurch gekennzeichnet, dass** es sich in dem katalytischen System bei dem Salz um Neodymtris-[bis(2-ethylhexyl)phosphat] handelt.

5. Verfahren nach einem der vorhergehenden Ansprüche, **dadurch gekennzeichnet, dass** das Molverhältnis von Funktionalisierungsmittel zu Aluminium vorteilhafterweise mindestens 1 beträgt.

6. Verfahren nach einem der vorhergehenden Ansprüche, **dadurch gekennzeichnet, dass** für das Funktionalisierungsmittel der Formel A-$R_i$-B A aus Glycidylamino, Isocyanaten, Iminen und Imidazolen ausgewählt ist.

7. Verfahren nach einem der vorhergehenden Ansprüche, **dadurch gekennzeichnet, dass** für das Funktionalisierungsmittel der Formel A-$R_i$-B B für ein Dialkoxysilan, vorteilhafterweise ein Diethoxysilan, steht.

8. Verfahren nach einem der vorhergehenden Ansprüche, **dadurch gekennzeichnet, dass** für das Funktionalisierungsmittel der Formel A-$R_i$-B $R_i$ für einen aliphatischen zweiwertigen $C_1$-$C_{10}$-Rest steht.

9. Verfahren nach einem der vorhergehenden Ansprüche, **dadurch gekennzeichnet, dass** das Molverhältnis von polyfunktioneller Verbindung zu Aluminium kleiner als 0,3 ist.

10. Verfahren nach einem der vorhergehenden Ansprüche, **dadurch gekennzeichnet, dass** die polyfunktionelle Verbindung der Formel $(E)_n$-$R_j$ entspricht, wobei n für eine ganze Zahl größer als oder gleich 3 steht, E für die funktionelle Gruppe steht und $R_j$ für ein Atom oder eine Gruppe von Atomen, das bzw. die die n Gruppen E trägt, steht.

11. Verfahren nach einem der vorhergehenden Ansprüche, **dadurch gekennzeichnet, dass** in der polyfunktionellen Verbindung die funktionelle Gruppe aus Glycidylamino, Isocyanaten, Iminen und Imidazolen ausgewählt ist.

12. Verfahren nach einem der vorhergehenden Ansprüche, **dadurch gekennzeichnet, dass** es sich bei der polyfunktionellen Verbindung um Tetraglycidylaminodiphenylmethan handelt.

13. Funktionalisiertes Polybutadien, das durch das Verfahren nach einem der vorhergehenden Ansprüche erhältlich ist, umfassend freie Polybutadienketten, die nur mit dem Funktionalisierungsmittel reagiert haben, und Polybutadienketten, die über die polyfunktionelle Verbindung aneinandergebunden sind, und **dadurch gekennzeichnet, dass**

   - sein molarer Gehalt an cis-1,4-Einheiten-Verknüpfung mindestens 90 %, bezogen auf das Polybutadien, beträgt;
   - sein Polydispersitätsindex kleiner als 2,3 ist;
   - sein mittlerer Prozentanteil von funktionalisierten Ketten größer als 25 % ist;
   - seine Mooney-Viskosität ML(1+4) bei 100 °C gleich oder größer als 40 ist;
   - sein Cold-Flow-Wert CF(1+6) bei 100 °C kleiner als 1 g, vorteilhafter kleiner als 0,5 g, ist.

14. Funktionalisiertes Polybutadien nach Anspruch 13 mit einem mittleren Gehalt an funktionalisierten Ketten zwischen 25 % und 60 %.

15. Funktionalisiertes Polybutadien nach Anspruch 13 mit einem mittleren Gehalt an funktionalisierten Ketten zwischen 40 % und 80 %.

16. Kautschukzusammensetzung, umfassend ein funktionalisiertes Polybutadien nach einem der Ansprüche 13 bis 15 und einen verstärkenden anorganischen Füllstoff.

**Claims**

1. Process for preparing a functionalized polybutadiene, **characterized in that** it comprises the following steps:

   a) homopolymerizing butadiene by means of a catalytic system so as to form a pseudo-living elastomer, said catalytic system being based on at least:

      - one conjugated diene monomer,
      - a salt of one or more rare earth metals of an organic phosphoric acid,
      - an aluminium-containing alkylating agent, and

- a halogen donor, comprising an alkylaluminium halide,

said salt is in suspension or in solution in at least one saturated inert hydrocarbon-based solvent of aliphatic or alicyclic type;

b) adding a polyfunctional compound comprising at least three functional groups to the pseudo-living elastomer formed in step (a), said functional group being capable of reacting with the reactive end of the pseudo-living elastomer;

c) adding a functionalizing agent corresponding to the formula A-$R_i$-B to the mixture formed in step (b), with A denoting a group capable of reacting with the reactive end of the pseudo-living elastomer, $R_i$ denoting an atom or a group of atoms forming a bond between A and B, and B denoting a function capable of reacting with a reinforcing filler;

d) recovering the functionalized polybutadiene;

and **in that** the total molar amount of aluminium in the polymerization medium is such that the (aluminium/rare earth salt) molar ratio has a value between 1 and 5 and **in that** the polymerization is carried out at a temperature between 40°C and 90°C.

2. Process according to Claim 1, **characterized in that**, in the catalytic system, the (aluminium/rare earth salt) molar ratio has a value between 1 and 4, advantageously ranging from 2.5 to 3.8.

3. Process according to either one of the preceding claims, **characterized in that** the polymerization is carried out at a temperature between 45°C and 75°C.

4. Process according to any one of the preceding claims, **characterized in that**, in the catalytic system, said salt is neodymium tris[bis(2-ethylhexyl)phosphate].

5. Process according to any one of the preceding claims, **characterized in that** the functionalizing agent/aluminium molar ratio is advantageously at least 1.

6. Process according to any one of the preceding claims, **characterized in that** for the functionalizing agent of formula A-$R_i$-B, A is selected from glycidylaminos, isocyanates, imines and imidazoles.

7. Process according to any one of the preceding claims, **characterized in that** for the functionalizing agent of formula A-$R_i$-B, B is a dialkoxysilane, advantageously a diethoxysilane.

8. Process according to any one of the preceding claims, **characterized in that** for the functionalizing agent of formula A-$R_i$-B, $R_i$ is an aliphatic divalent $C_1$-$C_{10}$ radical.

9. Process according to any one of the preceding claims, **characterized in that** the polyfunctional compound/aluminium molar ratio is less than 0.3.

10. Process according to any one of the preceding claims, **characterized in that** the polyfunctional compound corresponds to the formula $(E)_n$-$R_j$, with n denoting an integer greater than or equal to 3, E denoting said functional group and $R_j$ denoting an atom or a group of atoms bearing the n groups E.

11. Process according to any one of the preceding claims, **characterized in that** in the polyfunctional compound, said functional group is selected from glycidylaminos, isocyanates, imines and imidazoles.

12. Process according to any one of the preceding claims, **characterized in that** the polyfunctional compound is tetraglycidylaminodiphenylmethane.

13. Functionalized polybutadiene that can be obtained by means of the process according to any one of the preceding claims, comprising free polybutadiene chains having reacted only with the functionalizing agent and polybutadiene chains bonded together via the polyfunctional compound and **characterized by**

- its molar content of 1,4-cis unit linkage of at least 90% relative to the polybutadiene;
- its polydispersity index of less than 2.3;
- its average percentage of functionalized chains greater than 25%;

- its Mooney viscosity ML (1+4) at 100°C greater than or equal to 40;
- its cold flow CF (1+6) value at 100°C of less than 1 g, more advantageously less than 0.5 g.

14. Functionalized polybutadiene according to Claim 13, having an average content of functionalized chains of between 25% and 60%.

15. Functionalized polybutadiene according to Claim 13, having an average content of functionalized chains of between 40% and 80%.

16. Rubber composition comprising a functionalized polybutadiene according to any one of Claims 13 to 15 and a reinforcing inorganic filler.

**RÉFÉRENCES CITÉES DANS LA DESCRIPTION**

**Documents brevets cités dans la description**

- WO 0238636 A
- WO 03097708 A
- FR 2939800 A1
- FR 2939801 A1
- EP 0735088 A
- WO 0316837 A

**Littérature non-brevet citée dans la description**

- *CHEMICAL ABSTRACTS,* 3410-77-3
- *CHEMICAL ABSTRACTS,* 34036-80-1
- *CHEMICAL ABSTRACTS,* 1325615-33-5
- **VILMIN, F. ; DUSSAP, C. ; COSTE, N.** *Applied Spectroscopy,* 2006, vol. 60, 619-29